# EUROPÄISCHE PATENTSCHRIFT

(11) **EP 3 129 149 B1**
(45) Veröffentlichungstag und Bekanntmachung des Hinweises auf die Patenterteilung: **01.07.2020**
(21) Anmeldenummer: 14815758.9
(22) Anmeldetag: 19.12.2014
(51) Int. Cl.: B02C 4/30, B23P 11/02, H05B 6/10, H05B 6/14, H05B 6/42, H05B 6/44, B30B 11/16, B30B 3/00

(54) **VERFAHREN ZUR DEMONTAGE UND MONTAGE EINER RINGBANDAGE**
METHOD FOR DISMOUNTING AND MOUNTING AN ANNULAR SLEEVE
PROCÉDÉ POUR LE DÉMONTAGE ET LE MONTAGE D'UNE GARNITURE ANNULAIRE

(30) Priorität: 11.04.2014 DE 102014105164
(43) Veröffentlichungstag der Anmeldung: 15.02.2017
(73) Patentinhaber: Maschinenfabrik Köppern GmbH. & Co. KG, 45529 Hattingen (DE)
(72) Erfinder: DE WELDIGE, Eggert, 42555 Velbert Langenberg (DE); HÜLTER, Magnus, 42327 Wuppenrtal (DE); EHRKAMP, Jörg, 42499 Hückeswagen (DE)
(74) Vertreter: von dem Borne, Andreas
(86) Internationale Anmeldenummer: PCT/EP2014/078844
(87) Internationale Veröffentlichungsnummer: WO 2015/154833

(56) Entgegenhaltungen:
- WO-A1-2014/012770
- DE-A1- 19 532 848
- DE-A1- 19 833 456
- FR-A- 1 091 403
- JP-A- H05 277 519
- US-A- 3 503 241
- US-A- 3 724 059
- US-A- 4 408 382

## Beschreibung

Die Erfindung betrifft ein Verfahren zur Demontage einer auf einen Walzenkern einer Presswalze einer Walzenpresse aufgeschrumpften Ringbandage, wobei die Ringbandage unter Ausdehnung erwärmt und von dem Walzenkern abgezogen wird. Außerdem betrifft die Erfindung ein Verfahren zur Montage einer solchen Ringbandage auf einem Walzenkern einer Presswalze einer Walzenpresse im Wege des Aufschrumpfens.

Presswalze meint im Rahmen der Erfindung eine Presswalze einer Walzenpresse, insbesondere einer Hochdruckwalzenpresse für das (Hochdruck-)Zerkleinern von Material oder für das Brikettieren oder Kompaktieren von Material. Eine solche Walzenpresse weist in der Regel zwei gegensinnig rotierende Presswalzen auf. Beim Brikettieren oder Kompaktieren wird das körnige Schüttgut zwischen den Walzen verdichtet. Dazu ist die Bandage außenumfangsseitig in der Regel mit Presswerkzeugen, z. B. Formmulden für das Brikettieren oder Kompaktieren ausgerüstet. Beim Hochdruck-Zerkleinern ist die Bandage in der Regel mit einer Verschleißschutzschicht versehen.

In der Praxis ist es üblich, Ringbandagen durch Aufschrumpfen auf einem Walzenkern bzw. einer Welle zu befestigen. Dazu wird die Ringbandage auf eine bestimmte Temperatur erwärmt, so dass sie sich ausdehnt. Anschließend wird die Ringbandage auf den Kern aufgeschoben und im Zuge des Abkühlens zieht sich die Bandage zusammen, so dass sie im Wege eines Schrumpfsitzes auf dem Walzenkern fixiert wird. Das Erwärmen der Ringbandage im Zuge der Montage erfolgt in der Praxis in der Regel in einem geeigneten Ofen. Diese Vorgehensweise bereitet jedoch bei der Demontage und folglich beim Abschrumpfen Probleme, da in diesem Fall die gesamte Presswalze in den Ofen gebracht werden muss. Hinzu kommt, dass das Abschrumpfen nur dann funktioniert, wenn ein Ausdehnen des Kerns vermieden wird. Es muss folglich ein Temperaturgefälle zwischen Bandage und Kern erzeugt werden, so dass ein gleichzeitiges Aufheizen des Kerns vermieden werden muss.

Aus diesem Grund wird für das Abschrumpfen der Bandage in der Praxis bislang häufig die Erwärmung mittels Gasbrennern realisiert. Eine solche Erwärmung mit offener Flamme ist jedoch aus verschiedenen Gründen nachteilig, zumal vor Ort eine entsprechende Gasversorgung sichergestellt werden muss, so dass in der Regel in großem Umfang Glasflaschen bevorratet werden müssen.

Die Merkmale der Oberbegriffe der Ansprüche 1 und 2 sind aus der Praxis bekannt.

Die WO 2014/012770 A1 offenbart die Merkmale des Oberbegriffes des Anspruchs 2.

Die US 3 503 241 A offenbart ein Verfahren zur Demontage einer auf einen Walzenkern einer Kaltpilgerwalze aufgeschrumpften Ringbandage. Sie offenbart ebenfalls ein Verfahren zur Montage einer Ringbandage auf einem Walzenkern einer Kaltpilgerwalze. Die Ringbandage wurde induktiv erwärmt.

Daher wurde alternativ auch eine Widerstandsbeheizung mit entsprechenden Heizbändern oder Heizdecken vorgeschlagen - Hier setzt die Erfindung ein.

Der Erfindung liegt die Aufgabe zugrunde, ein Verfahren zu schaffen, mit dem sich eine Ringbandage in einfacher Weise schnell von einem Walzenkern einer Presswalze entfernen lässt. Diese Aufgabe wurde durch die Verfahren mit den Merkmalen der Ansprüche 1 und 2 gelöst.

Die Erfindung geht dabei von der Erkenntnis aus, dass sich eine Ringbandage sehr schnell und effektiv auf die erforderlichen Temperaturen aufheizen lässt, wenn eine induktive Erwärmung erfolgt. Dazu wird über eine von einem Wechselstrom durchflossene Induktionsspule ein magnetisches Wechselfeld in der Ringbandage erzeugt, welche aus einem elektrisch leitfähigen Material besteht. Dieses magnetische Wechselfeld induziert in der Ringbandage Wirbelströme und sofern die Ringbandage aus einem ferromagnetischen Material besteht, auch Ummagnetisierungsverluste. Gegenüber der Erwärmung in einem Ofen hat dieses Verfahren den großen Vorteil, dass die Bandage und insbesondere die montierte Presswalze mit Bandage nicht in einen entsprechenden Ofen gebracht werden muss. Das Verfahren eignet sich folglich besonders gut für das Abschrumpfen von Ringbandagen, die auf einem Walzenkern montiert sind. Die im Zusammenhang mit Gasbrennern auftretenden Nachteile können ebenfalls vermieden werden. Da keine Gasflaschen und kein Ofen erforderlich sind, lässt sich die Erfindung auch in abgelegenen Gebieten realisieren. Gegenüber einer Widerstandsbeheizung hat die induktive Erwärmung den Vorteil, dass die Wärme unmittelbar in der Ringbandage erzeugt wird und nicht erst durch Wärmeleitung auf die Ringbandage übertragen werden muss. Damit erfolgt eine besonders schnelle Erwärmung. Dieses hat den großen Vorteil, dass ein übermäßiges Aufheizen des Walzenkerns selbst vermieden werden kann. Die Wärme wird folglich schnell und gezielt dort erzeugt, wo sie benötigt wird, nämlich in der Ringbandage. Außerdem hat die induktive Erwärmung gegenüber einer Widerstandsbeheizung den Vorteil, dass sie nicht auf einen guten Wärmeübergang angewiesen ist, so dass eine Beheizung auch im Zusammenhang mit unebenen oder strukturierten Oberflächen effektiv möglich ist. Dieses ist z. B. im Zusammenhang mit strukturierten Oberflächen vorteilhaft, die z. B. bei Bandagen mit Verschleißelementen oder auch bei Bandagen mit Brikettierwerkzeugen realisiert sind. Solche Oberflächen lassen sich mit einer Widerstandsbeheizung aufgrund des schlechten Wärmeübergangs nicht effektiv erwärmen. Besonders vorteilhaft lässt sich die erfindungsgemäße induktive Erwärmung im Zuge des Abschrumpfens von gebrauchten Bandagen einsetzen, da diese aufgrund des Verschleißes stark unebene Oberflächen aufweisen, da die induktive Erwärmung nicht auf einen guten Wärmeübergang angewiesen ist.

Die induktive Erwärmung ist aus verschiedenen Bereichen der Technik grundsätzlich bekannt. Sie wird insbesondere auch zum Fügen und Lösen von Pressverbänden, z. B. von auf Wellen festsitzenden ringförmigen Körpern, z. B. Innenringen von Wälzlagern verwendet (vgl. DE 922 700 und DE 200 16 369 U1). Ferner wurde bereits vorgeschlagen, zur Montage und Demontage von Rotorkappen von Generatoren die Rotorkappe durch Anlegen einer oder mehrere Induktionsspulen induktiv zu erwärmen, und zwar mit einem höher frequenten Strom mit einer Arbeitsfrequenz von 5 bis 25 kHz (vgl. DE 195 32 848 A1).

Auf die Montage und Demontage von Ringbandagen bei Walzenpressen hatten diese Überlegungen jedoch keinen Einfluss. Im Vordergrund der Erfindung steht folglich die Anwendung der grundsätzlich bekannten Induktionserwärmung für die Demontage und Montage von Ringbandagen bei (Hochdruck-)Walzenpressen. Aufgrund der beschriebenen Vorteile lässt sich das erfindungsgemäße Verfahren besonders bevorzugt bei der Demontage von gebrauchten Ringbandagen einsetzen, die aufgrund eines Verschleißes unebene Oberflächen aufweisen.

Auch wenn erfindungsgemäß die Demontage und folglich das Abschrumpfen einer Ringbandage im Vordergrund steht, eignet sich die induktive Erwärmung ebenso für die Montage und folglich das Aufschrumpfen der Ringbandage auf den Walzenkern. Gegenstand der Erfindung ist folglich auch ein Verfahren zur Montage einer Ringbandage auf einen Walzenkern einer Presswalze, bei welchem die Ringbandage mit zumindest einer (stromdurchflossenen) Induktionsspule induktiv erwärmt wird. Dabei geht die Erfindung von der Erkenntnis aus, dass eine ohnehin zur Verfügung stehende Anlage zur Induktionserwärmung nicht nur für das Abschrumpfen, sondern ebenfalls für das Aufschrumpfen zum Einsatz kommen kann, ohne dass bauliche Veränderungen erforderlich sind. Besonders bevorzugt wird das erfindungsgemäße Verfahren für die Montage von Ringbandagen mit strukturierten Oberflächen verwendet.

Die Induktionserwärmung eignet sich erfindungsgemäß besonders deshalb, weil es sich bei Ringbandagen von (Hochdruck-)Walzenpressen um dickwandige Bandagen mit einer Wandstärke von mehr als 100 mm, vorzugsweise mehr als 200 mm, handelt. Es hat sich herausgestellt, dass sich solche dickwandigen Ringbandagen induktiv deutlich besser gezielt erwärmen und folglich Abschrumpfen bzw. Aufschrumpfen lassen. Besonders vorteilhaft ist dabei die Tatsache, dass trotz der massiven Bauweise solcher Ringbandagen eine gezielte Erwärmung der Bandage möglich wird, ohne dass ein übermäßiges Aufheizen des Kerns erfolgt. Die für das Abschrumpfen erforderliche Temperaturdifferenz lässt sich folglich sehr gut aufbauen. Der Außendurchmesser solcher Ringbandagen beträgt in der Regel mehr als 1000 mm, vorzugsweise mehr als 1500 mm. Das erfindungsgemäße Verfahren wird folglich bei großvolumigen und schweren Bauteilen realisiert.

Ferner hat sich herausgestellt, dass eine gezielte und effektive Erwärmung solcher Bauteile besonders effizient möglich ist, wenn die Induktionsspule mit einem Wechselstrom mit einer Frequenz von 1 kHz bis 20 kHz, vorzugsweise 10 kHz bis 15 kHz, betrieben wird. Die Anpassung der Frequenz und auch der Leistung kann im Einzelfall unter Berücksichtigung von Material und Geometrie erfolgen.

Auch wenn durch die Induktionserwärmung schon eine sehr gezielte Erwärmung der Bandage selbst möglich ist, kann es in der Praxis zweckmäßig sein, das Temperaturgefälle zwischen Bandage und Kern dadurch zu erhöhen, dass der Walzenkern während der Erwärmung der Ringbandage gekühlt wird. Dazu wird erfindungsgemäß vorgeschlagen, den Walzenkern über eine Kernbohrung zu kühlen, indem diese Kernbohrung mit einem Kühlmedium, z. B. Kühlwasser durchströmt wird. Dabei geht die Erfindung von der Erkenntnis aus, dass solche Presswalzen in der Regel ohnehin mit Kühlsystemen ausgerüstet sind, da Presswalzen im Betrieb häufig gekühlt werden. Eine folglich ohnehin vorhandene Kernbohrung kann erfindungsgemäß für die Kühlung des Kerns im Zuge des Abschrumpfens oder auch des Aufschrumpfens verwendet werden. Es ist aber auch möglich, solche Bohrungen (bzw. vergleichbare Durchbrechung oder Ausnehmung) für eine Kühlung speziell vorzusehen. Eine Vorrichtung zur Montage bzw. Demontage einer Ringbandage nach einem Verfahren der beschriebenen Art wird im Folgenden beschrieben. Diese Vorrichtung ist nicht Gegenstand der Erfindung. Eine solche Vorrichtung weist zumindest eine Induktionsvorrichtung auf, welche zumindest eine die Ringbandage umgebende Induktionsspule und zumindest eine Stromversorgung für die Induktionsspule aufweist. Die Induktionsspule wird von einem flexiblen Induktionskabel vorgegebener Länge gebildet, welches flexibel um die Ringbandage gewickelt wird. Ein solcher flexibler Induktor hat den Vorteil, dass er sich an unterschiedliche Geometrien, insbesondere unterschiedliche Bandagendurchmesser anpassen lässt. Außerdem lassen sich solche flexiblen Induktionskabel einfach transportieren, was bei einem variablen Einsatz vor Ort vorteilhaft ist. Solche Induktionskabel werden in der Regel gekühlt, sie sind bevorzugt mit einer eigenen Wasserkühlung versehen. Die Induktionskabel können z. B. aus Kupferdraht bestehen, welcher wassergekühlt ist. Dabei besteht die Möglichkeit, die gesamte Bandage mit einem einzigen Induktionskabel zu umwickeln. Es kann jedoch ebenso vorteilhaft sein, mit mehreren separaten Induktionsspulen zu arbeiten. In diesem Fall werden mehrere Induktionskabel um die Bandage gewickelt, wobei jedes einzelne Induktionskabel eine eigene Induktionsspule bildet, die einen bestimmten Bandagenabschnitt umgibt. Jede einzelne Induktionsspule kann mit einer separaten Stromversorgung versehen sein und folglich separat gesteuert werden, so dass verschiedene Bereiche auch unterschiedlich temperiert werden können. Mit mehreren Spulen lassen sich über die Breite der Bandage unterschiedlich starke Leistungen einbringen. Damit kann man z. B. höhere Abstrahlverluste am Rand oder höheren Leistungsbedarf in der Mitte kompensieren. Dieses kann z. B. bei solchen Walzen vorteilhaft sein, bei denen aufgrund der Konstruktion mit Walzenzapfen mehr Wärme in der Mitte in den Kern "abläuft". Der Einsatz mehrerer Induktionskabel erlaubt zudem eine einfache Anpassung an unterschiedliche Bandagenbreiten. So lassen sich z. B. auch breite Bandagen erwärmen, wenn nur kurze Induktionskabel oder schwache Induktionsaggregate zur Verfügung stehen. Die Induktionsspule ist als starre Induktionsspule ausgebildet, welche (mit radialem Abstand) auf die Ringbandage aufgeschoben wird bzw. in welche die Ringbandage eingeschoben wird. Die Induktionsspule bildet folglich einen fest vorgegebenen, starren Aufbau, in welchen eine Ringbandage eingesetzt werden kann. Ein entsprechendes Wickeln entfällt in diesem Fall. Die Induktionsspule ist dann jedoch an einen entsprechenden Außendurchmesser bzw. Durchmesserbereich einer Bandage angepasst. Wie im Zusammenhang mit dem flexiblen Induktionskabeln beschrieben, können auch bei starren Induktionsspulen mehrere Induktionsspulen (nebeneinander) zum Einsatz kommen, um die beschriebenen Vorteile zu erreichen. Es ist vorgesehen, dass die Induktionsspule die Ringbandage unter Zwischenschaltung einer thermischen Isolierung umgibt. Bei der Verwendung von flexiblen Kabeln kann folglich zunächst eine thermische Isolierung außenseitig auf die Ringbandage aufgebracht werden. Die Spule wird dann auf diese Isolierung aufgewickelt.

Es versteht sich, dass eine solche Induktionsvorrichtung mit einer geeigneten Stromversorgung versehen ist, welche gegebenenfalls mit einer geeigneten (automatisierten) Steuerung versehen ist. Die Stromversorgung kann mit einem Frequenzumrichter versehen sein, um eine geeignete Arbeitsfrequenz einstellen und gegebenenfalls variieren zu können. Über Temperaturmessvorrichtungen kann eine Temperaturüberwachung und dementsprechend auch eine Steuerung und/oder Regelung der Beheizung erfolgen. Dazu können z. B. Thermoelemente zum Einsatz kommen.

Im Folgenden wird die Erfindung anhand einer lediglich ein Ausführungsbeispiel darstellenden Zeichnung näher erläutert. Es zeigen:
- Fig. 1: eine grundsätzlich bekannte Presswalze mit Walzenkern und Ringbandage,
- Fig. 2: die Presswalze nach Anspruch 1 mit montierter Induktionsvorrichtung zum Abschrumpfen der Bandage in einem ersten nicht erfindungsgemäßen Beispiel und
- Fig. 3: ein abgewandeltes nicht erfindungsgemäßes Beispiel

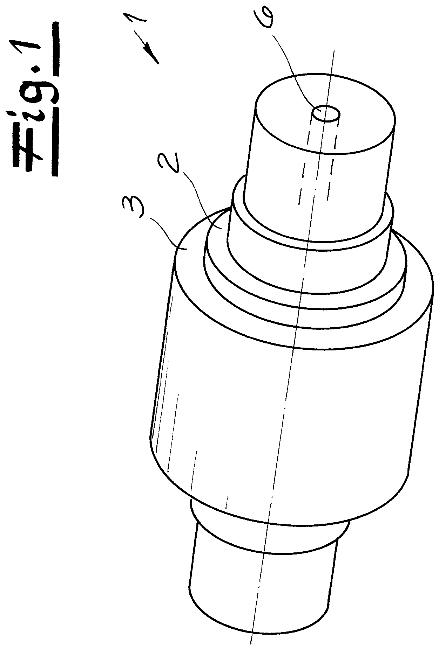

In Fig. 1 ist eine grundsätzlich bekannte Presswalze 1 gezeigt, welche einen Walzenkern 2 und eine darauf aufgeschrumpfte Ringbandage 3 aufweist. Eine solche Ringbandage 3 kann mit einer Verschleißschutzschicht oder auch mit Brikettier- oder Kompaktierwerkzeugen ausgerüstet sein. Einzelheiten sind dargestellt.

Um die aufgeschrumpfte Ringbandage zu entfernern, erfolgt eine Erwärmung mittels Induktion. Dazu wird eine Induktionsvorrichtung verwendet, welche eine Induktionsspule 4 und eine nicht dargestellte Stromversorgung aufweist. Die Induktionsspule 4 umgibt die Ringbandage 3, so dass über die stromdurchflossene Induktionsspule eine induktive Erwärmung der Ringbandage 3 erfolgt. Im Zuge der Erwärmung der Ringbandage 3 dehnt sich diese aus, und zwar stärker als der Walzenkern 2, so dass sich die Ringbandage 3 von dem Walzenkern 2 lösen und abziehen lässt.

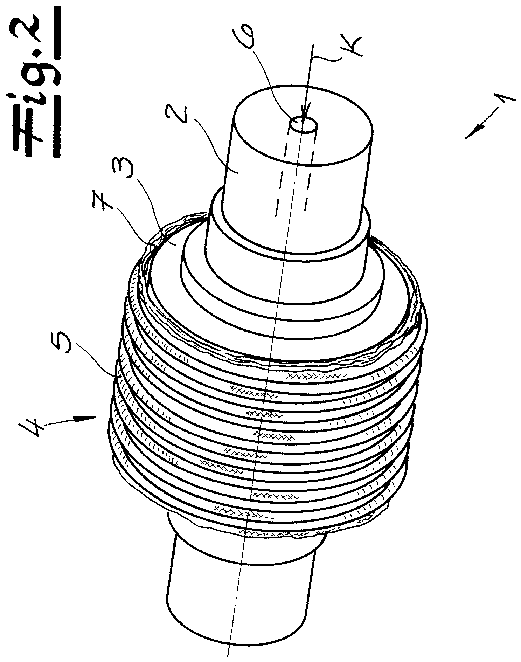

In dem Biespiel nach Fig. 2 wird die Induktionsspule 4 von einem flexiblen Induktionskabel 5 gebildet, welches um die Ringbandage 3 gewickelt ist. Dieses Induktionskabel 5 kann wassergekühlt sein.

Außerdem ist in Fig. 2 angedeutet, dass der Walzenkern 2 ebenfalls gekühlt wird, und zwar durch Wasserkühlung. Dazu wird eine ohnehin vorhandene Kernbohrung 6 von Kühlwasser K durchströmt. Das Kühlwasser K durchströmt die Kernbohrung 6 jedoch nicht unmittelbar, sondern es wird eine (nicht dargestellte) Kühllanze in den Kern eingebracht, wobei die Lanze vom Kühlwasser durchströmt wird. Jedenfalls wird durch zusätzliche Kühlung des Walzenkerns 2 eine Erwärmung des Walzenkerns 2 besonders effektiv vermieden, so dass sich sehr schnell der gewünschte Temperaturgradient aufbaut. Dabei ist im Übrigen in Fig. 2 erkennbar, dass die Induktionsspule 4 die Ringbandage 3 unter Zwischenschaltung einer thermischen Isolierung 7 umgibt. Das flexible Induktionskabel 5 ist auf eine die Ringbandage 3 umgebende Isolierschicht 7 aufgewickelt.

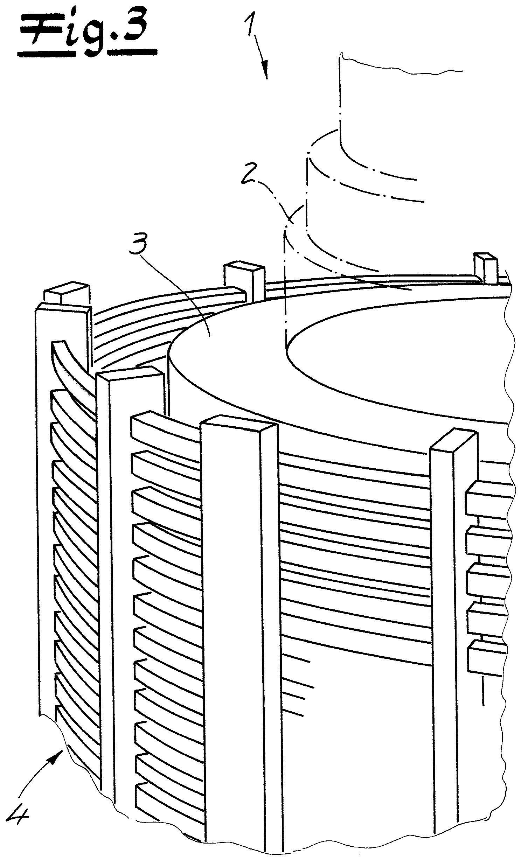

Fig. 3 zeigt ein alternatives nicht erfindungsgemäßes Beispiel, bei welcher die Induktionsspule 4 nicht von einem flexiblen Induktionskabel gebildet wird, sondern als starre Induktionsspule ausgebildet ist. Die Ringbandage 3 bzw. die Walze 1 mit Ringbandage wird folglich in diese starre Induktionsspule 4 bzw. in deren Innenraum eingesetzt. In diesem Fall ist die Induktionsspule 4 folglich an den Außendurchmesser der abzuschrumpfenden bzw. aufzuschrumpfenden Bandage angepasst.

Auch wenn die Figuren beispielhaft das Abschrumpfen einer montierten Bandage zeigen, lassen sich die dargestellten Induktionsvorrichtungen ebenso zum Erwärmen der Ringbandage im Zuge des Aufschrumpfens der Bandage verwenden.

## Patentansprüche

1. Verfahren zur Demontage einer auf einen Walzenkern (2) einer Presswalze (1) einer Walzenpresse aufgeschrumpften Ringbandage (3),
wobei die Ringbandage (3) unter Ausdehnung erwärmt und von dem Walzenkern (2) abgezogen wird,
**dadurch gekennzeichnet, dass** die Ringbandage (3) mit zumindest einer Induktionsspule (4) induktiv erwärmt wird, wobei die Ringbandage (3) dickwandig mit einer Wandstärke von mehr als 100 mm ausgebildet ist und einen Außendurchmesser von mehr als 1000 mm aufweist.

2. Verfahren zur Montage einer Ringbandage (3) auf einem Walzenkern (2) einer Presswalze (1) einer Walzenpresse, wobei die Ringbandage (3) unter Ausdehnung erwärmt und auf den Walzenkern (2) aufgeschoben wird und
wobei die Ringbandage (3) anschließend im Zuge des Abkühlens auf dem Walzenkern (2) aufgeschrumpft wird,
**dadurch gekennzeichnet, dass** die Ringbandage (3) mit zumindest einer Induktionsspule (4) induktiv erwärmt wird, wobei die Ringbandage (3) dickwandig mit einer Wandstärke von mehr als 100 mm ausgebildet ist und einen Außendurchmesser von mehr als 1000 mm aufweist.

3. Verfahren nach Anspruch 1 oder 2, **dadurch gekennzeichnet, dass** die Ringbandage (3) dickwandig mit einer Wandstärke von mehr als 200 mm ausgebildet ist.

4. Verfahren nach einem der Ansprüche 1 bis 3, **dadurch gekennzeichnet, dass** die Ringbandage (3) einen Außendurchmesser von mehr als 1500 mm aufweist.

5. Verfahren nach einem der Ansprüche 1 bis 4, **dadurch gekennzeichnet, dass** die Induktionsspule (4) mit einem Wechselstrom mit einer Frequenz von 1 kHz bis 20 kHz, vorzugsweise 10 kHz bis 15 kHz betrieben wird.

6. Verfahren nach einem der Ansprüche 1 bis 5, **dadurch gekennzeichnet, dass** der Walzenkern (2) während und/oder vor der Erwärmung der Ringbandage (3) gekühlt wird.

7. Verfahren nach Anspruch 6, **dadurch gekennzeichnet, dass** der Walzenkern über eine Kernbohrung (6) von einem Kühlmedium (K), z. B. Wasser, durchströmt wird.

## Claims

1. Method of unmounting an annular sleeve (3) shrunk onto a roller core (2) of a press roller (1) of a roller press, wherein
the annular sleeve (3) is heated so as to expand and is pulled off the roller core (2),
**characterised in that** the annular sleeve (3) is inductively heated with at least one induction coil (4), wherein the annular sleeve (3) is thick-walled with a wall thickness of more than 100 mm and has an outer diameter of more than 1000 mm.

2. Method of mounting an annular sleeve (3) on a roller core (2) of a press roller (1) of a roller press
wherein the annular sleeve (3) is heated so as to expand and is pushed onto the roller core (2) and
wherein the annular sleeve (3) is then shrunk onto the roller core (2) during the course of cooling,
**characterised in that** the annular sleeve (3) is inductively heated with an inductive coil (4), wherein in the annular sleeve (3) is thick-walled with a wall thickness of more than 100 mm and has an outer diameter of more than 1000 mm.

3. Method according to claim 1 or 2 **characterised in that** the annular sleeve (3) it thick-walled with a wall thickness of more than 200 mm.

4. Method according to any one of claims 1 to 3 **characterised in that** the annular sleeve (3) has an outer diameter of more than 1500 mm.

5. Method according to any one of claims 1 to 4 **characterised in that** the induction coil (4) is operated with an alternating current with a frequency of 1 kHz to 20 kHz, preferably 10 kHz to 15 kHz.

6. Method according to any one of claims 1 to 5 **characterised in that** the roller core (2) is cooled during and/or before heating of the annular sleeve (3).

7. Method according to claim 6 **characterised in that** a cooling medium (K), e.g. water, flows though the roller core via a drilled hole (6) in the core.

## Revendications

1. Procédé, destiné à démonter un bandage annulaire (3) fretté sur un noyau de cylindre (2) d'un cylindre presseur (1) d'une presse à cylindre,
lors duquel on fait chauffer le bandage annulaire (3) en le dilatant et on le retire du noyau de cylindre (2),
**caractérisé en ce qu'**on fait chauffer par induction le bandage annulaire (3) à l'aide d'au moins une bobine d'induction (4), le bandage annulaire (3) étant conçu avec une paroi épaisse, d'une épaisseur de paroi supérieure à 100 mm et présentant un diamètre extérieur supérieur à 1000 mm.

2. Procédé, destiné à monter un bandage annulaire (3) sur un noyau de cylindre (2) d'un cylindre presseur (1) d'une presse à cylindre, lors duquel on fait chauffer le bandage annulaire (3) en le dilatant et on l'emboîte sur le noyau de cylindre (2) et
lors duquel on frette par la suite le bandage annulaire (3) au cours du refroidissement sur le noyau de cylindre (2),
**caractérisé en ce qu'**on fait chauffer par induction le bandage annulaire (3) à l'aide d'au moins une bobine d'induction (4), le bandage annulaire (3) étant conçu avec une paroi épaisse, d'une épaisseur de paroi supérieure à 100 mm et présentant un diamètre extérieur supérieur à 1000 mm.

3. Procédé selon la revendication 1 ou 2, **caractérisé en ce que** le bandage annulaire (3) est conçu avec une paroi épaisse, d'une épaisseur de paroi supérieure à 200 mm.

4. Procédé selon l'une quelconque des revendications 1 à 3, **caractérisé en ce que** le bandage annulaire (3) présente un diamètre extérieur supérieur à 1500 mm.

5. Procédé selon l'une quelconque des revendications 1 à 4, **caractérisé en ce qu'**on fait fonctionner la bobine d'induction (4) avec un courant alternatif d'une fréquence de 1 kHz à 20 kHz, de préférence de 10 kHz à 15 kHz.

6. Procédé selon l'une quelconque des revendications 1 à 5, **caractérisé en ce qu'**on fait refroidir le noyau de cylindre (2) pendant et/ou avant de faire chauffer le bandage annulaire (3).

7. Procédé selon la revendication 6, **caractérisé en ce que** le noyau de cylindre est traversé par l'intermédiaire d'un perçage central (6) par un agent de refroidissement (K), par exemple de l'eau.
